# EUROPÄISCHE PATENTANMELDUNG

(11) **EP 1 394 316 A2**
(43) Veröffentlichungstag der Anmeldung: **03.03.2004**
(21) Anmeldenummer: 03015064.3
(22) Anmeldetag: 03.07.2003
(51) Int. Cl.: D06M 23/16, D06M 15/564, B60R 13/02

(54) **Textiles Flächengebilde und Verfahren zur Veredelung eines textilen Flächengbildes**

(30) Priorität: 24.07.2002 DE 10234604
(71) Anmelder: Gaenslen & Völter GmbH & Co. KG, 72555 Metzingen (DE)
(72) Erfinder: Kauderer, Hans-Joachim, 72768 Reutlingen (DE)
(74) Vertreter: Lindner, Michael, Dipl.-Ing.

(57) **Zusammenfassung**

Die vorliegende Erfindung betrifft ein textiles Flächengebilde, insbesondere flächiges Gewebe aus Naturfasern, mit zumindest einer flächigen textilen Lage (13), die eine obere (18) und eine untere (19) Seite aufweist, wobei das Flächengebilde (10) zum Aufwickeln auf eine Kaule und anschließender Weiterverarbeitung geeignet ist. Das textile Flächengebilde (10) zeichnet sich dadurch aus, daß ein vollflächig auf die untere Seite (19) der Lage (13) aufgebrachter abgebundener Klebstoff (20) vorgesehen ist (Fig. 1).

## Beschreibung

Die vorliegende Erfindung betrifft ein textiles Flächengebilde, insbesondere flächiges Gewebe aus Naturfasern, mit zumindest einer flächigen textilen Lage, die eine obere und eine untere Seite aufweist, wobei das Flächengebilde zum Aufwickeln auf eine Kaule und anschließender Weiterverarbeitung geeignet ist. Die Erfindung betrifft darüber hinaus ein Verfahren zur Veredelung eines textilen Flächengebildes.

Solche textilen Flächengebilde werden in den unterschiedlichsten Bereichen weiterverarbeitet. So werden beispielsweise Flächengebilde in Form von bahnförmigen Geweben als Bezugstoffe in der Automobilindustrie eingesetzt. Die gewebten und ausgerüsteten Bezugstoffe werden auf Kaulen aufgewickelt zu den jeweiligen Konfektionären geliefert, die die Bezugstoff-Bahnen entsprechend zuschneiden und vernähen oder weitere Verarbeitungsschritte vornehmen. Allgemein werden zum Zuschneiden mechanisch arbeitende Zuschneidemaschinen eingesetzt, wobei neuerdings jedoch auch Laser zum Schneiden verwendet werden. Beim Zuschneiden solcher Bezugstoff-Bahnen ergibt sich immer wieder das Problem, daß die Bezugstoffe an den Schnittkanten ausfransen, was anschließend zusätzliche Arbeitsschritte zur Verfestigung der Schnittkanten erforderlich macht. Zusätzlich wird das Vernähen einzelner Zuschnitte im Bereich dieser Schnittkanten aufgrund der geringen Festigkeit problematisch.

Zur Überwindung dieser Probleme wurden deshalb die Bezugstoff-Bahnen mit Weichschaumlagen, in der Regel dünne PUR-Schaumbahnen, oder bspw. mit entsprechend geeigneten Vliesen kaschiert. Die durch die Schaumbahnen bzw. das Vlies herbeigeführte Eigensteifigkeit hat die Handhabbarkeit beim Nähen der Zuschnitte verbessert.

Allerdings wurde dies mit erhöhtem Materialaufwand und damit zusätzlichen Kosten erkauft.

Aufgrund des hohen Kostendrucks in der Automobilindustrie besteht vor diesem Hintergrund das Bedürfnis, textile Flächengebilde zu schaffen, die kostengünstig herzustellen sind und dennoch eine gute Handhabbarkeit beim Zuschneiden und Nähen aufweisen.

Die der Erfindung zugrunde liegende Aufgabe wird von einem textilen Flächengebilde gelöst, das einen vollflächig auf die untere Seite der Lage aufgebrachten abgebundenen Klebstoff aufweist.

D.h. mit anderen Worten, daß das textile Flächengebilde, nämlich ein Gewebe, ein Gewirke oder ein Vlies aus Natur- oder Synthetikfasern, mit einem Klebstoffauftrag versehen wird, der die Aufgabe der bisherigen Weichschaumlage bzw. des Vlies übernimmt. Der Erfinder hat überraschenderweise festgestellt, daß ein solcher abgebundener Klebstoffauftrag die Festigkeit des Flächengebildes so weit erhöht, daß ein Ausfransen der Schnittkanten beim Zuschneiden im wesentlichen vermieden wird.

Da somit auf eine bisher eingesetzte Weichschaumlage bzw. Vlies - ohne Einbußen bei der Festigkeit des Gebildes - verzichtet werden kann, lassen sich deutliche Einsparungen bei der Herstellung erzielen. Darüber hinaus wird nicht nur das Ausfransen beim Zuschneiden reduziert, sondern kann auch die Vernähbarkeit einzelner Zuschnitte verbessert werden. Schließlich ergibt sich auch ein reduzierter Verzug beim Nähen, so daß die optische Qualität verbessert wird.

Wie bereits zuvor kurz angedeutet, wird im Zusammenhang mit der vorliegenden Erfindung unter einem textilen Flächengebilde allgemein ein bahnförmiges Gewebe oder Gewirke oder Vlies verstanden, das aus Synthetik und/oder Naturfasern gebildet ist. Die Erfindung ist jedoch besonders vorteilhaft bei flächigen Geweben, die als Bezugstoffe, beispielsweise in der Automobilindustrie, Verwendung finden. Selbstverständlich ist die Erfindung nicht darauf beschränkt.

Als besonders vorteilhaft haben sich Schmelzklebstoffe herausgestellt, die eine leichte Verarbeitbarkeit bieten und eine gute Adhäsion besitzen. Als besonders vorteilhaft haben sich Klebstoffe aus der Gruppe der thermoplastischen Polyurethane (TPU) herausgestellt.

Eine ausreichende Festigkeit des textilen Flächengebildes wird bereits bei einer Klebstoffmenge im Bereich von 20 bis 50 g/qm erreicht, wobei der Klebstoff gleichmäßig auf eine Seite des textilen Flächengebildes aufgebracht ist. Zur Erreichung der erfindungsgemäßen Ziele ist es allerdings nicht notwendig, einen über die gesamte Fläche geschlossenen Klebstoffauftrag vorzusehen. Der Klebstoff kann auf die untere Seite der textilen Lage als Pulver oder Granulat, sowie in Form von Schlitzfolien, Klebevliesen oder Klebefolien aufgebracht werden.

In einer bevorzugten Weiterbildung der Erfindung bildet der Klebstoff eine ebene Fläche, um insbesondere Unebenheiten der unteren Seite der textilen Lage im wesentlichen auszugleichen.

Dies hat den Vorteil, daß ein sehr präziser Laserschnitt möglich wird. Bei bisherigen Geweben ergab sich nämlich beim Zuschneiden per Laser das Problem, daß die Oberfläche des Gewebes uneben und unterschiedlich dick ist. Da der Laser mit einer gleichbleibenden Leistung während des Zuschnitts arbeitet, ergaben sich, bedingt durch die unterschiedlichen Dicken bzw. Abstände zwischen Laser und Gewebeoberfläche, ungleichmäßige Schnitte. Dieses Problem spielt insbesondere dann eine große Rolle, wenn mit dem Laser nur Dekorschwächungen (Perforationen) angebracht werden sollen. Solche Dekorschwächungen sind unter anderem bei Bezugstoffen erforderlich, die beispielsweise Seitenairbags überspannen und bei Aktivierung des Airbags aufreißen sollen.

Der vollflächig aufgebrachte geglättete Klebstoff führt nun dazu, daß der Laserstrahl immer etwa im gleichen Abstand zu dem Laser auf die zu schneidende Oberfläche trifft und auch etwa gleich viel Material vorfindet. Damit läßt sich insbesondere die Reproduzierbarkeit von Dekorschwächungen mittels Laser verbessern.

An dieser Stelle sei angemerkt, daß sich als Klebstoffe zwar Klebstoffe auf der Basis thermoplastischer Polyurethane als besonders vorteilhaft herausgestellt haben, diese aber nicht alleine und ausschließlich gute Ergebnisse liefern. So können selbstverständlich auch andere thermoplastische Schmelzklebstoffe eingesetzt werden, wie beispielsweise reaktive PUR, PES/PET, PA, PE, EVA etc.

Die der Erfindung zugrunde liegende Aufgabe wird auch von einem Verfahren zur Veredelung eines textilen Flächengebildes gelöst, das folgende Schritte aufweist:
- vollflächiges Auftragen eines Klebstoffs auf eine Seite des Flächengebildes,
- Aktivieren des Klebstoffs,
- Abbinden des Klebstoffs, und
- Aufwickeln des Flächengebildes auf eine Kaule.

Dieses Verfahren umfaßt nur wenige Schritte und läßt sich folglich sehr einfach realisieren, wobei ein Flächengebilde erzeugt wird, das die bereits zuvor erläuterten Vorteile aufweist. Insofern kann auf die vorhergehenden Ausführungen verwiesen werden.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Eine Ausführungsform der Erfindung wird nun anhand eines Ausführungsbeispiels unter Bezugnahme auf die Zeichnung näher erläutert. Dabei zeigen:
- Fig. 1: eine schematische Schnittansicht durch ein Gewebe mit einem Klebstoffauftrag;
- Fig. 2: eine schematische Schnittdarstellung eines Gewebes mit einer Klebstoffschicht; und
- Fig. 3: eine schematische perspektivische Darstellung einer Gewebe-Bahn mit aufgebrachtem Klebstoff.

Nachfolgend wird die Erfindung anhand eines Ausführungsbeispiels detailliert erläutert. Dabei sei als textiles Flächengebilde ein Gewebe angenommen, das aus Naturfasern gefertigt ist. Es versteht sich jedoch, daß sich die Erfindung nicht auf solche Gewebe beschränkt, sondern auch bei anderen textilen Flächengebilden, wie Gewirken, Vliesen oder bspw. mit Polyurethan verfestigten Mikrofaservliesen, anwendbar ist. Allerdings hat sich die Erfindung gerade bei Geweben, und hier insbesondere bei gewebten Bezugstoffen, als besonders vorteilhaft herausgestellt.

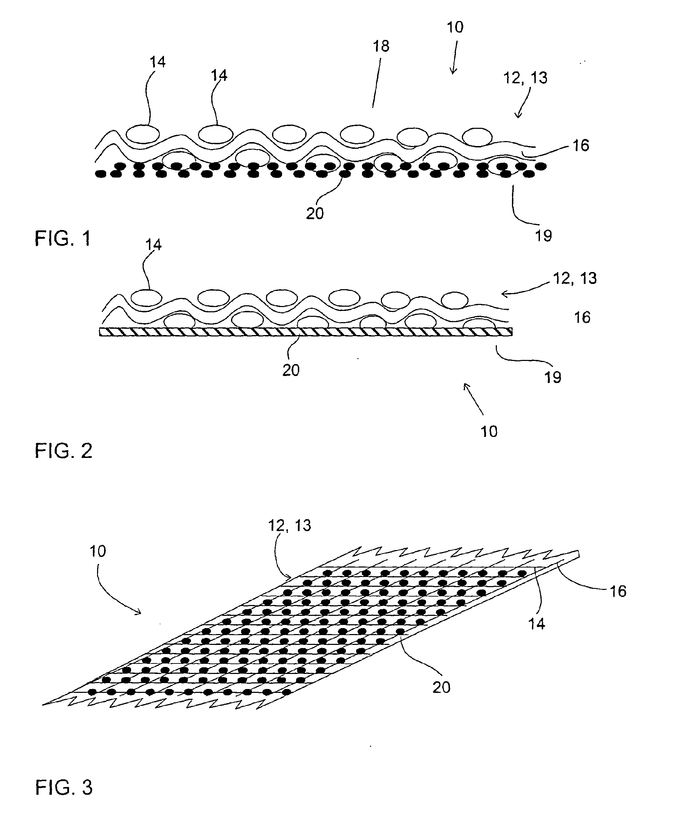

In Fig. 1 ist ein textiles Flächengebilde 10 dargestellt, das im vorliegenden Ausführungsbeispiel einen gewebten Bezugstoff bildet. Zu erkennen sind in Fig. 1 schematisch angedeutete Schußfäden 14 und ein Kettenfaden 16. Das Gewebe bzw. der gewebte Bezugstoff 12 bildet eine textile flächige Lage 13, die etwa eine Dicke von 1 mm besitzt und als Bahnware hergestellt und weiterverarbeitet wird.

Eine solche Weiterverarbeitung des bahnförmigen gewebten Bezugstoffs besteht nach der Herstellung und Veredelung beispielsweise darin, zugeschnitten und vernäht zu werden. Diese Weiterverarbeitung erfolgt im allgemeinen bei einem Konfektionär, der den bahnförmigen gewebten Bezugstoff auf Kaulen aufgewickelt angeliefert bekommt.

Die Bezugstoff-Lage 13 weist eine Oberseite 18 und eine Unterseite 19 auf, wobei die Oberseite 18 später nach der Weiterverarbeitung die sichtbare Seite sein wird.

In Fig. 1 ist schematisch angedeutet, daß auf die Unterseite 19 der Bezugstoff-Lage 13 ein Klebstoffilm 20 aufgebracht ist. Dieser Klebstoffilm 20 ist vollflächig auf die Unterseite 19 aufgetragen, wie dies mit der schematischen Darstellung in Fig. 3 verdeutlicht werden soll. D.h., daß der Klebstoffilm nicht nur Randbereiche bedeckt.

Als geeignete Klebstoffe kommen all jene Klebstoffe in Frage, die sich leicht verarbeiten lassen und eine gute Adhäsion auf Gewebe besitzen. Zudem sollen es Klebstoffe sein, die gut in das Gewebe eindringen und in relativ kurzer Zeit abbinden, so daß die Klebeeigenschaft verlorengeht und sich das textile Flächengebilde 10 ohne Verkleben aufwickeln läßt.

Als Klebstoffe kommen beispielsweise TPU, reaktive PUR, PES, PA, PE, EVA in Frage. Als besonders vorteilhaft haben sich thermoplastische Klebstoffe auf Polyurethan-Basis herausgestellt.

Die in Fig. 1 gewählte Darstellung des Klebstoffs 20 soll andeuten, daß der Klebstoff in Form von Pulver oder Granulat auf die Unterseite 19 der Bezugstoff-Lage 13 appliziert wurde. Selbstverständlich ist der Klebstoff auch in anderer Form auftragbar, beispielsweise als Schlitzfolie, Klebevlies oder als Klebefolie, was durch die Darstellung in Fig. 20 verdeutlicht werden soll.

Die Herstellung des textilen Flächengebildes 10 kann auf unterschiedliche Art und Weise erfolgen, wobei beispielhaft ein Verfahren nachfolgend dargestellt werden soll.

Zur Herstellung des gezeigten textilen Flächengebildes 10 von Fig. 1 wird zunächst auf die Unterseite 19 der Klebstoff als Pulver appliziert. Die Bezugstoff-Lage 13 läuft hierbei an einer Klebstoff-Appliziervorrichtung vorbei, die Klebstoff über die gesamte Breite der Bezugstoff-Lage 13 aufstreut.

Anschließend wird der Klebstoff erhitzt und damit aktiviert, so daß er die Bezugstoff-Lage 13 benetzt und in diese eindringt. Nach der Aktivierung wird der Klebstoff 20 verquetscht und abgeflacht, so daß eine möglichst ebene Fläche an der Unterseite 19 entsteht. Eventuell wird zusätzlich auch die Bezugstoff-Lage 13 abgeflacht.

Um den Abbinde-Prozeß des Klebstoffs 20 zu beschleunigen, wird die nun mit dem Klebstoff 20 beschichtete Bezugstoff-Lage 13 durch eine Kühlvorrichtung geführt.

Nach dem Abbinden kann nun das textile Flächengebilde 10 auf einer Kaule aufgewickelt werden, ohne daß übereinander liegende Bezugstoff-Lagen miteinander verkleben.

Wie bereits erwähnt, wird der Klebstoff 20 vollflächig auf die Unterseite der Bezugstoff-Lage 13 aufgetragen, wobei es jedoch nicht notwendigerweise erforderlich ist, daß sich ein geschlossener Klebstoffilm über die gesamte Fläche der Unterseite 19 ausbildet.

Zusammenfassend ist festzustellen, daß das beschriebene textile Flächengebilde 10 eine ausgezeichnete Handhabbarkeit beim Zuschneiden, ob mechanisch oder optisch, besitzt. Die Neigung zum Ausfransen an den Schnittkanten ist deutlich reduziert und die Reproduzierbarkeit von mittels Laser hergestellten Perforationen deutlich verbessert. Diese Verbesserung ist insbesondere dadurch bedingt, daß der in die Bezugstoff-Lage 13 eingedrungene, verquetschte und abgeflachte Klebstoff 20 eine für den Laserstrahl gleichmäßig dicke Materialschicht bildet, so daß die Schnittiefen bei einem Laser mit konstanter Leistung sehr genau eingestellt und gehalten werden können. Desweiteren hat der Erfinder festgestellt, daß sich die Flammwidrigkeit des erfindungsgemäßen Flächengebildes verbessert.

## Patentansprüche

1. Textiles Flächengebilde, insbesondere flächiges Gewebe (12) aus Naturfasern, mit zumindest einer flächigen textilen Lage (13), die eine obere (18) und eine untere (19) Seite aufweist, wobei das Flächengebilde (10) zum Aufwickeln auf eine Kaule und anschließender Weiterverarbeitung geeignet ist, **gekennzeichnet durch** einen vollflächig auf die untere Seite (19) der Lage (13) aufgebrachten abgebundenen Klebstoff (20).

2. Flächengebilde nach Anspruch 1, **dadurch gekennzeichnet, daß** der Klebstoff (20) ein Schmelzklebstoff ist.

3. Flächengebilde nach Anspruch 1 oder 2, **dadurch gekennzeichnet, daß** der Klebstoff (20) aus der Gruppe der thermoplastischen Polyurethane gewählt ist.

4. Flächengebilde nach einem der vorhergehenden Ansprüche, **dadurch gekennzeichnet, daß** der Klebstoff (20) in einer Menge von 20-50 g/qm aufgebracht ist.

5. Flächengebilde nach einem der vorhergehenden Ansprüche, **dadurch gekennzeichnet, daß** das Flächengebilde (10) ein Bezugstoff ist, insbesondere zur Verwendung in Fahrzeugen.

6. Flächengebilde nach einem der vorhergehenden Ansprüche, **dadurch gekennzeichnet, daß** der Klebstoff (20) eine ebene Fläche bildet und Unebenheiten der unteren Seite (19) der textilen Lage (13) im wesentlichen ausgleicht.

7. Verfahren zur Veredelung eines textilen Flächengebildes, insbesondere eines flächigen Gewebes, mit den Schritten:
- vollflächiges Auftragen eines Klebstoffs auf eine Seite des Flächengebildes,
- Aktivieren des Klebstoffs,
- Abbinden des Klebstoffs, und
- Aufwickeln des Flächengebildes auf eine Kaule.

8. Verfahren nach Anspruch 7, **dadurch gekennzeichnet, daß** der Klebstoff ein Schmelzkleber ist, der zum Aktivieren erwärmt und zum Abbinden gekühlt wird.

9. Verfahren nach Anspruch 7 oder 8, **dadurch gekennzeichnet, daß** ein thermoplastischer Klebstoff auf Polyurethan-Basis verwendet wird.

10. Verfahren nach Anspruch 7, **dadurch gekennzeichnet, daß** vor dem Aufwickeln der aufgetragene Klebstoff gepresst wird, um eine ebene Oberfläche zu erhalten.
